# EUROPEAN PATENT SPECIFICATION

(11) **EP 2 837 127 B1**
(45) Date of publication and mention of the grant of the patent: **09.03.2016**
(21) Application number: 13715971.1
(22) Date of filing: 10.04.2013
(51) Int. Cl.: H04W 76/02, H04W 84/04, H04W 92/20, H04L 5/00

(54) **A METHOD AND A SYSTEM FOR COMMUNICATION IN LTE NETWORKS**
VERFAHREN UND SYSTEM ZUR KOMMUNIKATION IN LTE-NETZWERKEN
PROCÉDÉ ET SYSTÈME DE COMMUNICATION DANS DES RÉSEAUX LTE

(30) Priority: 12.04.2012 ES 201230552
(43) Date of publication of application: 18.02.2015
(73) Proprietor: Telefonica S.A., 28013 Madrid (ES)
(72) Inventor: MINO DIAZ, Emilio, E-28013 Madrid (ES); CUCALA GARCIA, Luis, E-28013 Madrid (ES); MIGUEL CAMPOY, Luis, E-28013 Madrid (ES)
(74) Representative: Carlos Hernando, Borja
(86) International application number: PCT/EP2013/057511
(87) International publication number: WO 2013/153128

(56) References cited:
- US-A1- 2010 067 604
- NEW POSTCOM: "Discussion of enhanced mobility solutions between MeNB and HeNB", 3GPP DRAFT; R3-101850 DISCUSSION OF ENHANCED MOBILITY SOLUTIONS BETWEEN MENB AND HENB_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Beijing; 20100629, 23 June 2010 (2010-06-23), XP050453764, [retrieved on 2010-06-23]
- CATT: "Discussion on mobility enhancements for (H)eNBs-to-HeNBs", 3GPP DRAFT; R3-101878, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Beijing; 20100629, 23 June 2010 (2010-06-23), XP050453789, [retrieved on 2010-06-23]
- QUALCOMM INCORPORATED: "Analysis of supporting the X2 interface for HeNBs", 3GPP DRAFT; R3-101559, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Montreal, Canada; 20100510, 1 May 2010 (2010-05-01), XP050425310, [retrieved on 2010-05-01]
- NTT DOCOMO ET AL: "Use case of direct X2 based (H)eNB-HeNB mobility", 3GPP DRAFT; R3-102839, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Xi'an; 20101011, 2 October 2010 (2010-10-02), XP050453641, [retrieved on 2010-10-02]
- 3GPP: "3rd Generation Partnership Project; Technical Specification Group Radio Access Network; Evolved Universal Terrestrial Radio Access Network (E-UTRAN); X2 application protocol (X2AP) (Release 10)", 3GPP DRAFT; DRAFT_36423-A40, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 11 December 2011 (2011-12-11), XP050565916, [retrieved on 2011-12-11]

## Description

### Field of the art

The present invention generally relates to wireless communications and more particularly to a method and a system for data transmission in cellular systems according to the 3GPP LTE specifications.

### Prior State of the Art

3GPP LTE and LTE-Advanced are new cellular systems, designed to cope with the increasing requirements of data transmission in cellular system motivated by the increasing use of mobile data devices as, smartphones, tablets and computers with cellular connections.

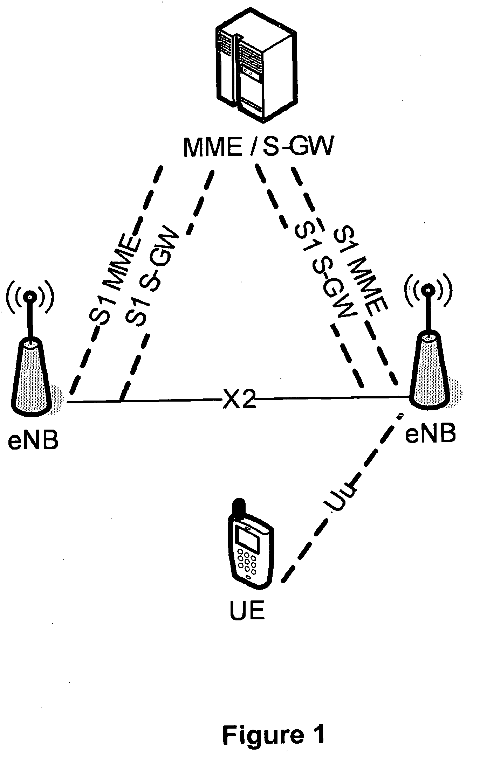

Figure 1 presents the Long Term Evolution (LTE) Radio Access Network general architecture. This architecture is composed of cellular base station eNBs (evolved node B), providing through the interface Uu, the user plane and control plane protocol terminations towards the UEs (user equipments). The eNBs are interconnected with each other by means of the X2 interface. The eNBs are also connected by means of the S1 interface to the EPC (Evolved Packet Core), more specifically to the MME (Mobility Management Entity) by means of the S1-MME interface and to the Serving Gateway (S-GW) by means of the S1-U interface.

LTE femtonodes, or Home evolved Node B (HeNB), in 3GPP terminology [1], are short range low power cellular base stations that provide mobile broadband coverage, typically in indoor scenarios. Femtocells enable a reduced distance between the radio transmitter and receiver with reduced radio signal attenuation, which translate on obtaining a high level of radio spectral efficiency.

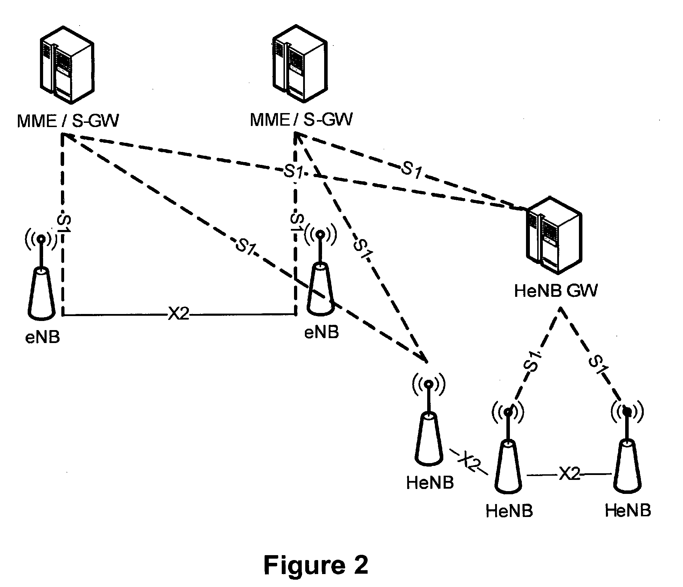

Figure 2 shows the LTE release 10 architecture and interfaces between eNBs, HeNBs and MME/S-GW. The Home eNB Gateway (HeNB GW) can be optionally used to connect a large number of HeNBs with the EPC. The HeNB GW serves as a concentrator, terminating the Control Plane (S1-MME) and the User Plane (S1-S-GW) of the HeNBs. The HeNB also can be connected directly to the MME.

The HeNB GW is seen by the MME as an eNB. The HeNB GW is seen by the HeNB as an MME.

In releases previous to 3GPP LTE release 10, there were not X2 connections between HeNBs (i.e. releases 8, 9).

It should be highlighted that currently (LTE release 10) there is not an X2 connection between HeNBs and eNBs (Figure 2) only between HeNBs and between HeNBs of the same group, and therefore it is not possible the coordination of both types of nodes to establish cooperation mechanisms as: X2 handover, energy saving (cell switch on/off), configuration updates and intercell interference coordination (ICIC) CoMP and other future functionalities. The X2 interface is composed of a control plane or X2-AP [4] and a user plane X2-U [8].

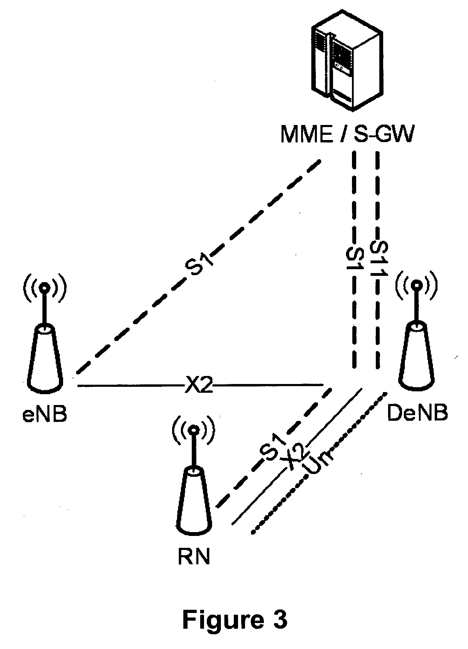

From LTE release 10 it has been defined two new networks elements, the Relay Node (RN) and a Relay Serving eNB, called Donor eNB (DeNB). Figure 3 shows as the RN incorporates the X2 and S1 wireless interfaces for the connection between a relay node (RN) and a relay serving base station (DeNB), over a modified version of the Uu radio interface between the eNB and the terminal (UE). This modified version of the Uu interface is called the Un interface [5].

The RN supports the eNB functionality, meaning it terminates the radio protocols of the LTE radio interface, and X2 and S1 interfaces. In addition to the eNB functionality, the RN also supports a subset of the UE functionality, e.g. physical layer, layer-2, RRC, and NAS functionality, in order to wirelessly connect to the DeNB.

The S11 interface is a RN specific interface between the DeNB and the RN supports the RN setup and operation, not applicable to this invention.

As in other wireless systems, in LTE and LTE-Advanced (LTE-A) the achievable data rates are strongly dependent on the users' positions in the network. A considerable performance gap between cell-edge and cell-centre is observed due to inter-cell interference, being the principal limiting factor of system performance.

Reacting to this limitation in LTE-A, in the 3GPP release 11, it has been proposed a technical innovation called Coordinated Multi-point transmission or CoMP [2] [3] between base stations and the terminals (UEs), consisting on the coordinated or joint transmission to the terminals, to improve coverage, cell-edge throughput, and/or system efficiency.

3GPP started the definition of CoMP in the technical recommendation TR 36.814 [3] for LTE-A release 11, defining some CoMP concepts and terminology. Cooperative Multipoint transmission and reception is a framework that refers to a system where several geographically distributed wireless nodes cooperate with the aim of improving the performance in the common cooperation area, with special focus in users with low SINR.

The main goal of CoMP is to transmit from multiple cell sites, in a coordinated way, to the terminals in the cell-edge region, to improve its performance in this critical region, balancing cell centre and cell edge performance [7]. For the downlink, this coordination can be as simple as techniques that are based on the transmission from a single cell with interference avoidance in the neighbouring cells or more complex as in the case where the same data is transmitted from multiple cell sites. For the uplink, since the signal can be received by multiple cell sites, the system takes advantage of this multiple reception to significantly improve the link performance.

The recommendation TR 36.814 includes the definition of different CoMP sets that also are used in this document:
- CoMP cooperating set. It corresponds with the set of (geographically separated) points (e.g. eNBs, Remote Radio Heads) directly or indirectly participating in the transmission of user data (PDSCH channel) to one or several UE(s).
- CoMP transmission point(s): point or set of points actively transmitting PDSCH to one or several UE(s).
- CoMP measurement set: set of cells that report channel state or statistical information related to their link to a determined UE.

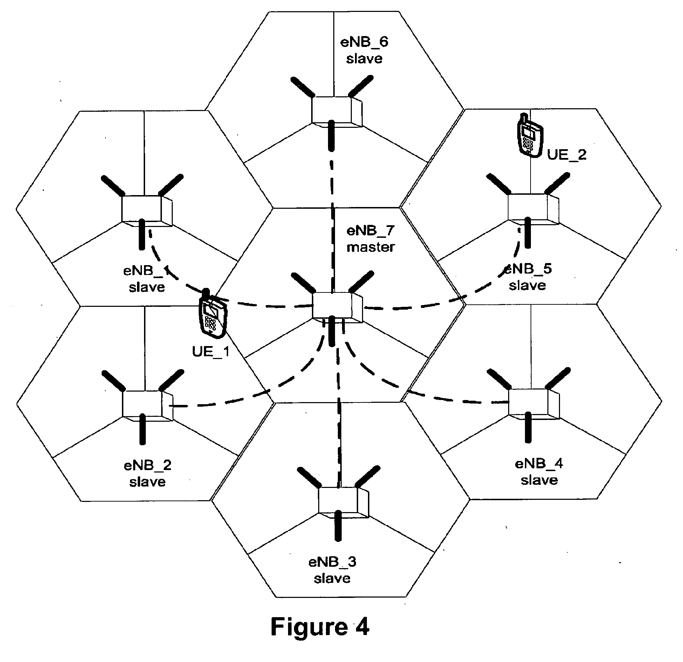

An example of a CoMP cooperating set composed of eNBs is presented in Figure 4. In this example, a central eNB (master) with three cells coordinates a cluster of 21 cells composed of 8 slaves eNBs, serving the mobile terminals inside the cluster. The CoMP cluster can be created statically by the O&M subsystem or by a network entity, based on UEs measurements.

Different CoMP topologies are possible, for example UE_2, could be served by 2 cells of the same eNB, in this case. eNB_5. This is called intra-site CoMP it. UE_1 could be served by 3 individual cells belonging to eNB_1, eNB_2 and eNB_7.

In Figure 4 a central scheduler, that could be located in the master cell, processes the channel information and channel quality (CSI and CQI) of all the terminals belonging to the cooperating set. After processing the information the master cell will manage the radio resources of the cooperative set. As it was shown in Figure 1 the communication between eNBs is based on the 3GPP LTE standardized wired X2 interface that corresponds to discontinuous line that joins all the eNBs.

3GPP is studying CoMP benefits, basically via physical layer simulations considering zero delay in the backhaul; the results have been presented in the recommendation 3GPP TR 36.819 [2] with the objective of defining the physical layer features under consideration to operate multi-point coordination and assess the performance benefits of those features and the required specification support for both the downlink and the uplink. In a second step it will be analyzed the degradation of CoMP performance considering different delays [11].

CoMP needs a fast coordination between the involved nodes in transmission and reception. The degradation of CoMP performance increase is analyzed in [9], considering delays of 1, 3, 5, 10, 15 and 20 ms and concluding that to exploit CoMP delays should be in the order of 1 ms.

The needed changes in the physical layer of LTE-Advanced to support CoMP have been presented in the recommendation 3GPP TR 36.814 [3].

Two types of downlink reference signals structure are considered to support spatial multiplexing and CoMP:
- Reference signals used for Physical Downlink Shared Channel (PDSCH) demodulation. Section 7.4.1 of 36.814 [3]
- Reference signals used for feedback on downlink channel state: Channel Quality Information (CQI), Precoding Matrix Indicator (PMI) and Rank Indicator (RI) [3]. In the uplink the channel state feedback information is under definition (Section 8.2 of 36.814 [3]).

Currently it has not been defined yet the precise functionality and signaling to transport the channel state feedback information and the signal used for PDSCH demodulation, using the X2 interface.

CoMP [3] will encompass several possible coordinating schemes among the involved wireless nodes:
- Coordinated beamforming/scheduling (CB/CS): user data is transmitted only from a single cell, as in the case of non-CoMP transmission, but considering the interfering cell. The scheduling, including any Beamforming functionality, is dynamically coordinated between the cells in order to reduce the interference between different transmissions.
- Joint processing techniques (JP): multiple cells are jointly and coordinately transmitting as a single transmitter with antennas that are geographically separated to one or several UE(s). This scheme has the potential for higher performance, compared to coordination only in the scheduling, but comes at the expense of more requirements on the eNB backhaul. Two approaches are being considered:
- Joint transmission (JP/JT): The data to a single UE is simultaneously transmitted from multiple transmission points, (coherently or non-coherently) to improve the received signal quality and/or cancel actively interference. This technique needs a perfect synchronization between the involved transmitters.
- Dynamic cell selection (JP/DCS), where data are transmitted from a single point of transmission, dynamically selected in each subframe.

The techniques more appropriate for femtocells are those with fewer requirements on signal processing and synchronization, due to the femtocells limited processing capabilities.

An invention related to wireless X2 interfaces is US 2011/0136494 "Over the air intercell interference coordination methods in cellular systems" which presents an inter-cell coordination method to coordinate interference between cells by broadcasting interference coordination information using a wireless X2 interface between HeNBs and eNBs, based on the use of the User Terminals in the cell border, acting as relays, to transmit interference information between HeNB and eNB. This solution presents the problem that can suppose a high impact on the LTE base station and femtonodes and especially on the terminals, increasing terminals complexity and battery consumption.

### Problems with existing solutions:

One of the advances in version 10 of LTE [1], with respect to release 9 has been the inclusion of the X2 interface between HeNBs to enable X2-based lossless handover between HeNBs if no access control at the MME is needed, i.e. when the handover is between closed/hybrid access HeNBs having the same CSG ID or when the target HeNB is an open access HeNB.

Although in some documents [12,13,14] has been disclosed the possibility of connecting eNB's with HeNB's to communicate with each other by means of a direct X2 connection, not yet has been foreseen the use of a direct X2 wireless interface between eNB's and HeNB's to perform said connection. Furthermore, neither has been foreseen the use of a frequency band between said cellular base stations, for its communication, different to the one used for communicating with a user terminal.

This X2 [6] interface could enable present and future eNB -HeNB functionalities, like CoMP, X2 handover and interference coordination. 3GPP standards do not include yet CoMP for femtocells (HeNB's).

### Influence of backhaul delay in CoMP performance

One of the requirements of CoMP is to have a low delay between the members of the coordination set. The delay has two components; the time required to transfer a message between two nodes across the X2 interface, that can be influenced by signaling congestion, and the time needed to process the X2 messages in the eNBs/ HeNBs. The X2 delay has impact on receiving Channel Quality Information on time, affecting the selection of the correct Modulation and Coding.

In many circumstances (e.g. high load or congestion) the wired X2 interfaces can experiment delays in the order of several milliseconds, that can degrade significantly CoMP performance gains, as it is presented in [9] [10]. As an example, in [9] it is shown that with a delay of 5ms throughput losses are about 20%. 3GPP has started to analyze CoMP gains with no delay, and in further steps it will study the backhaul delay impact in performance [11]

### Summary of the Invention

It is necessary to offer an alternative to the state of the art which covers the gaps found therein, particularly those related to the lack of proposals which allow the inclusion of eNB-HeNB functionalities in LTE networks.

To that end, the present invention provides, in a first aspect, a method for communication in LTE networks, comprising at least one user terminal (UE) communicating through a wireless connection to a macro cellular base station, abbreviated as eNB, and to a at least one femto cellular base station, abbreviated as HeNB, over a cellular system. On contrary to the known proposals, the method of the first aspect of the present invention comprises providing a wireless X2 interface between said eNB and HeNB stations in said LTE network to provide communication services to said at least one user terminal.

In a preferred embodiment, said wireless X2 interface between said eNB and said at least HeNB is provided for establishing coordination between said eNB and HeNB stations.

The method also comprises establishing communication between said eNB and HeNB stations via said wireless X2 interface, using a frequency band which is different to the one used for communicating with said at least one user terminal.

Other embodiments of the method of the first aspect of the invention are described according to appended claims 2 to 9, and in a subsequent section related to the detailed description of several embodiments.

A second aspect of the present invention provides a system for communication in LTE networks, comprising:
- at least one user terminal to communicate through a wireless connection to a macro cellular base station (eNB) and to a at least one femto cellular base station (HeNB) over a cellular system;
- said at least one macro cellular base station (eNB); and
- said at least one femto cellular base station (HeNB), each of said eNB and HeNB comprises wireless X2 communication means configured for establishing a wireless X2 interface to provide communication services to said at least one user terminal.

Other embodiments of the system of the second aspect of the invention are described according to appended claim 11 to 16, and in a subsequent section related to the detailed description of several embodiments.

The invention is defined by the appended claims 1-16. The embodiments that do not fall under the scope of the claims have to be interpreted as examples useful for understanding the invention.

### Brief Description of the Drawings

The previous and other advantages and features will be more fully understood from the following detailed description of embodiments, with reference to the attached, which must be considered in an illustrative and non-limiting manner, in which:
Figure 1 shows the LTE Radio Access Network general architecture.
Figure 2 shows the LTE architecture and interfaces between eNBs, HeNBs and MME/S-GW in 3GPP release 10.
Figure 3 shows the LTE architecture and interfaces between RN and DeNB in 3GPP release 10.
Figure 4 shows an example of different CoMP cooperative sets composed of 9 eNBs and 27 sectors.
Figure 5 presents the general architecture of a wireless system with two FDD radio systems used in the present invention.
Figure 6 presents an example of the architecture of the macrocell (CeNB)/femtocell (CHeNB) wireless X2.
Figure 7 presents the X2 user plane (X2-U) protocol stacks of the nodes that support exchange of X2 user plane information.
Figure 8 presents the X2 control plane (X2-C) protocol stacks of the nodes that support exchange of X2 control information.
Figure 9 presents the X2 tunnelled transport procedure, according to an embodiment of the present invention.
Figure 10 presents an example of CoMP cooperating sets between a central CoMP entity, located in an eNB and two groups of femtocells.

### Detailed Description of Several Embodiments

The present invention presents a method and a system to provide a wireless X2 interface between LTE femtocells (HeNB in 3GPP terminology) and LTE base stations (eNB) to provide coordination between these nodes, enabling function as: CoMP, intercell interference coordination (ICIC), X2 handover, energy saving and other future functionalities that will be defined by the 3GPP. Currently there is not an X2 interface between eNBs and HeNBs.

Two LTE bands are used in this invention, one high LTE band (F_high) and a low LTE band (F_low). The higher LTE band is used for normal LTE cellular communications between LTE femtonodes and LTE terminals. In the lower LTE band, with less radio attenuation and therefore more range, is used to establish a wireless X2 interfaces between an eNB and a group of HeNBs for coordination of radio resources or to transport over this X2 interface specific CoMP signalling. Both LTE bands (E-UTRA in the 3GPP terminology) are included in 3GPP 36.101 Section 5.5.

The wireless X2 extended interface is based on the use of a low frequency LTE band (F low) to transmit and receive X2 and CoMP signalling using a new modules called "X2_extended/CoMP". The normal cellular communication band, to which the UEs are attached, is a higher LTE frequency (F_high). To implement CoMP the preferred uplink / downlink duplexing scheme is FDD because the use of TDD could suppose some delay increase that affect CoMP performance. As preferred option, in many parts of this document is assumed the use of a FDD duplexing scheme.

From the protocol architecture point of view it is defined a new type of femtocell (called CHeNB) composed by a standard femtocell, operating at FDD_high, plus a relay node, operating at FDD low including all the protocol layers, being the femtocell and the relay node (RN) bridged through the X2 protocol. Also a new type of based station is defined (called CeNB) composed by a standard base station (eNB), operating at FDD_high, plus a base station with support of relay nodes (a DeNS in 3GGP terminology) as they are defined in [1].

The proposed new eNB to HeNB X2 interface is tunnelled on a pre-existing X2 interface between a CeNB (that uses DeNS X2 setup protocols) and a CHeNB (that uses RN X2 setup protocols).

### Architecture for wireless X2 between eNBs and HeNBs:

The architecture of this invention is based on the use of a new type of LTE femtocell (called CHeNB) composed by a standard femtocell, operating at FDD_high, plus a relay node, operating at FDD low, being the femtocell and the relay node (RN) bridged through the X2 protocol. Also a new type of LTE based station is defined (called CeNB) composed by a standard base station (eNB), operating at FDD_high, plus a base station with support of relay nodes (a DeNB in 3GGP terminology).

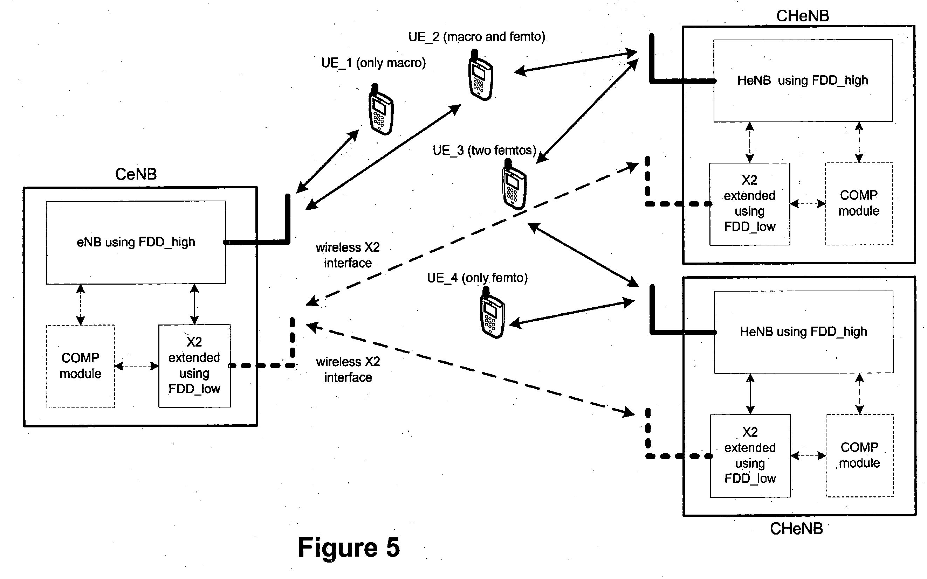

Figure 5 presents the general architecture of a wireless system with two FDD radio systems, being one of them used to establish an extended X2 interface between a master cell and different femtocells forming a femtocell cluster. Two new modules are added to the standard eNB and HeNB; one used to establish the X2 wireless interface and an optional module used for CoMP. The CoMP module uses the X2 wireless interface.

The idea is not to change the operation of the normal users served by an eNB, in FDD_high, when the wireless x2 interface is operating.

The macrocells and femtocells include new modules, called X2_extended / CoMP in Figure 5, to establish X2 and coordinate the resource usage of these nodes for avoiding interferences between the users of the eNodeB and the users of the cluster of femtonodes and allowing the use of CoMP. The coordination will be done through the FDD low air interface, provided by these new modules, that allows the exchange of control messages and user data. In the next sections a description of these modules is included, outlining the main parts and its functionalities.

Figure 5 depicts a CoMP example. Some users in the CoMP cluster could be served by only one cell (e.g. UE_1 and UE 4), and other users can enjoy of joint transmission (e.g. UE_2 and UE_3).

The LTE lower frequencies will be used to establish a P2P communication, between the controller eNB and the cluster of HeNBs.

### Frequency bands:

This invention relies on the use of two frequencies bands called in this document FDD_low and FDD_high, being the most immediate application cellular system 3GPP LTE and LTE Advanced, but could be applied to other multiband cellular systems, with the necessary adaptations (e.g 3GPP WCDMA). FDD_low is used to transport X2 signalling and CoMP signalling information between a macrocell (eNB) and a group of femtocells (HeNBs).

The use of lower frequencies to transport X2 signalling is motivated by their lower propagation losses respect higher frequencies (the most used frequency band for LTE is 2.6 GHz). As an example, the well-known channel model COST 231-Hata applicable between 1.5 and 2 GHz and urban zones, the path losses (dB) have a factor directly proportional to the radio frequency of 33.9 log (f).

The volume of data transported over the X2/CoMP control band is much lower than the data transferred over the LTE access band (FDD_high), because sometimes CoMP will be not used when it will not give noticeable performance gains (e.g. and UE near a femtocell cell center).

Table 1 presents the LTE FDD bands, but this invention also can be implemented with LTE TDD bands to transport X2 control bands. The preferred LTE duplexing scheme is FDD, as it provides lower delays that TDD. The LTE TDD and FDD bands can be found in the standard 3GPP 36.101 Section 5.5.

**Table 1: LTE FDD frequency bands**

| **E-UTRA Operating Band** | **Uplink (UL) operating band BS receive UE transmit** | | | **Downlink (DL) operating band BS transmit UE receive** | | | **Duplex Mode** |
|---|---|---|---|---|---|---|---|
| | F_{UL low} - F_{UL high} | | | F_{DL low} - F_{DL high} | | | |
| 1 | 1920 MHz | - | 1980 MHz | 2110 MHz | - | 2170MHz | FDD |
| 2 | 1850 MHz | - | 1910 MHz | 1930 MHz | - | 1990 MHz | FDD |
| 3 | 1710 MHz | - | 1785 MHz | 1805 MHz | - | 1880 MHz | FDD |
| 4 | 1710 MHz | - | 1755 MHz | 2110 MHz | - | 2155 MHz | FDD |
| 5 | 824 MHz | - | 849 MHz | 869 MHz | - | 894MHz | FDD |
| 6¹ | 830 MHz | - | 840 MHz | 875 MHz | - | 885 MHz | FDD |
| 7 | 2500 MHz | - | 2570 MHz | 2620 MHz | - | 2690 MHz | FDD |
| 8 | 880 MHz | - | 915 MHz | 925 MHz | - | 960 MHz | FDD |
| 9 | 1749.9 MHz | - | 1784.9 MHz | 1844.9 MHz | - | 1879.9 MHz | FDD |
| 10 | 1710 MHz | - | 1770 MHz | 2110 MHz | - | 2170 MHz | FDD |
| 11 | 1427.9 MHz | - | 1447.9 MHz | 1475.9 MHz | - | 1495.9 MHz | FDD |
| 12 | 699 MHz | - | 716 MHz | 729 MHz | - | 746 MHz | FDD |
| 13 | 777 MHz | - | 787 MHz | 746 MHz | - | 756 MHz | FDD |
| 14 | 788 MHz | - | 798 MHz | 758 MHz | - | 768 MHz | FDD |
| 15 | Reserved | | | Reserved | | | FDD |
| 16 | Reserved | | | Reserved | | | FDD |
| 17 | 704 MHz | - | 716 MHz | 734 MHz | - | 746 MHz | FDD |
| 18 | 815 MHz | - | 830 MHz | 860 MHz | - | 875 MHz | FDD |
| 19 | 830 MHz | - | 845 MHz | 875 MHz- | - | 890 MHz | FDD |
| 20 | 832 MHz | - | 862 MHz | 791 MHz | - | 821 MHz | FDD |
| 21 | 1447.9 MHz | - | 1462.9 MHz | 1495.9 MHz | - | 1510.9 MHz | FDD |
| Note 1: Band 6 is not applicable | | | | | | | |

Therefore, it is used the capability of future eNBs, HeNBs with transceivers adapted to operate at different frequencies, as currently is being defined in the 3GPP LTE-Advanced, not to aggregate capacity as currently is proposed, but to coordinate eNBs with HeNBs through a wireless X2 interface in the FDD-low band.

### Un, S1 and X2 wireless interfaces:

One of the most important aspects of this invention is the establishment of a X2 wireless interface between the coordinating eNB and the HeNB cluster derived from the solution proposed for the coordination between a Donor eNB and a group of Relay Nodes [5], as it is presented in Figure 5.

This solution is harmonized as much as possible with the LTE standard. The RN will not serve terminals, and therefore this X2 interface only will be used to support some X2 Control/User Plane functionalities [6] as HeNB switching on/off, radio resource/ interferences coordination and to transport COMP data, not supporting other functionalities related with UE services.

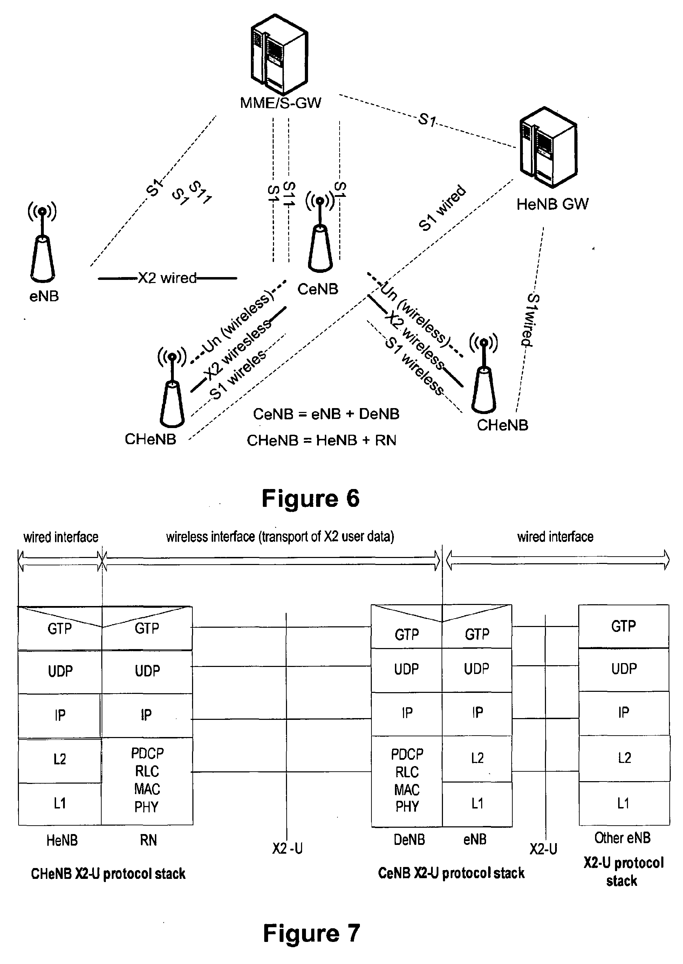

Figure 6 depicts the wireless interfaces between a Controller eNB (CeNB) and two femtonodes, with wireless X2/CoMP support (CHeNBs). The DeNS and the RN only are used to transport X2 information to allow X2 and CoMP functionalities between the CeNB and the CHeNBs.

From a point of view of the LTE architecture, the CHeNBs is composed of a HeNB plus a relay node (RN) and the CeNB is composed of a Donor eNB (DeNB or eNB with support of relays) and a standard eNB, as it is shown in Figure 6.

The CHeNB has several wireless interfaces (Un, X2 wireless and S1 wireless) associated with the RN operation and one wired S1 interface associated with the femtonode operation, that terminates in the HeNB GW. The CHeNB also has two IP addressed, one associated with the RN and the other associated to the HeNB communications.

The CeNB is composed of a standard eNB plus a DeNS (an eNB with support of relays) bridged thought the X2 interface. This CeNB uses two S1 interfaces with the MME/S-GW (and therefore two IP addresses) one is used in the communication between the MME/S-GW-DeNB-RNs and another one used for the communications between the MME/S-GW-eNB-HeNBs.

The femtonodes can optionally include, from LTE release 10, an X2 interface to support only some inter-femtonodes cluster functionalities as handover and interference coordination. The X2 interface between femtonodes is not useful for X2 and CoMP purposes because, X2 and CoMP information flow goes from a central point (Coordinating eNB) to the cluster members (femtonodes) and in the other way round, for this reason it has not been depicted in Figure 6.

The CeNB terminates the X2 and Un wireless interfaces from CHeNBs. The CeNB provides X2 proxy functionality between the CHeNBs and other cooperative set network nodes (other CHeNBs or HeNBs).

Figure 7 presents the X2 user plane (X2-U) protocol stacks of the nodes that support exchange of X2 user plane information. The nodes involved are: CHeNB / CeNB / Other eNB.

In Figure 7 it can be seen as from an X2-U perspective the CHeNB is composed of a HeNB and a RN with a bridge in the GTP layer. This bidirectional bridge passes the HeNB X2-U messages associated with CoMP (or X2 standard messages when CoMP is not in use) to the RN, to be transported using the wireless X2-U interface for its transport to the CeNB, and vice versa, it receives X2_U wireless messages from the CeNB.

Regarding the CeNB, it is composed of a DeNS and an eNB also with a bridge in the GTP layer, with the same functionality that the GTP bridge in the CHeNB. This bidirectional bridge passes the eNB X2-U messages associated with CoMP (or X2 standard message when CoMP is not in use) to the DeNS wireless X2-U interface for its transport to the CHeNB and vice versa, it receives X2-U wireless messages from the CHeNB.

Communications between CHeNB of the same cooperative set will be through the X2-U wireless interface of the CeNB. The X2 data transport is based on IP and is defined in 3GPP 36.424 [8].

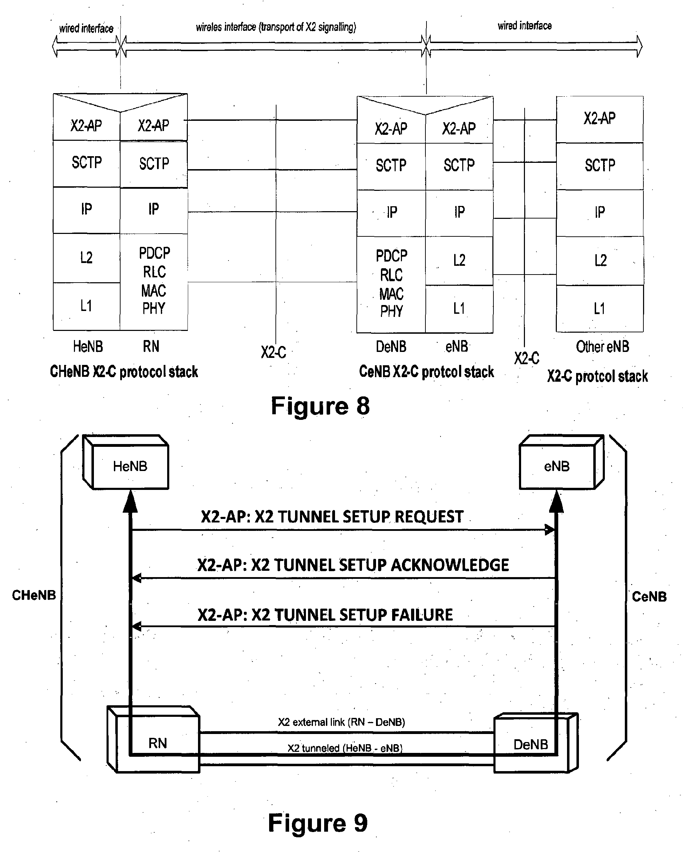

The X2 wireless user plane packets are mapped to radio bearers over the Un interface. The radio access layers used in the communications between the CHeNB and the CeNB are the LTE standard ones (PDCP, RLC, MAC and PHY). Figure 8 presents the X2 control plane (X2-C) protocol stacks of the nodes that support exchange of X2 control information. The nodes involved are: CHeNB / CeNB / Other eNB. The X2 wired application protocol uses an IP based transport and is defined in 3GPP TS 36.423 [6].

In Figure 8 it can be seen as from an X2 control plane the CHeNB is composed of a HeNB and a RN with a bridged in the X2 application layer (X2-AP). This bridge passes the HeNB X2-C messages, associated with CoMP (or X2 standard message when CoMP is not in use) to the RN wireless X2-C interface for its transport to the CENT and vice versa, it receives the X2-U messages from the wireless CeNB interface for the HeNB.

The CeNB, it is composed of a DeNS bridge also in the X2-AP layer, with a functionality similar to the X2-AP bridge in the CHeNB. X2-AP signalling is transported using the DeNB- RN x2 wireless interface.

The X2 wireless control plane packets are mapped to radio bearers over the Un interface. The radio access layers used from the transport of X2-C signalling between the CHeNB and the CeNB are the standard LTE radio access layers (PDCP, RLC, MAC and PHY).

The processing of X2-AP messages includes modifying X2-AP UE IDs, Transport Layer address and GTP tunnel end point identifiers (TEIDs) but leaves other parts of the message unchanged.

The X2 wireless interface signalling packets are mapped to radio bearers over the Un interface. As it can be seen in Figure 8, the radio access layers used in the transport of X2 user plane data between the CHeNB and the CeNB are the standard LTE radio access layers (PDCP, RLC, MAC and PHY).

The protocols stacks for the S1 User and Control Planes are the same that the ones corresponding to the X2 interface, but with the following differences:
- In the User Plane, the S1 User Plane (S1-U) interface replaces the X2 User Plane interface (X2-U) and wired part of the S1-U from the CeNB terminates in the S-GW, when the X2-U terminated in the Other eNB (Figure 8).
- In the Control Plane, the S1 Control Plane interface (S1-MME) replaces the X2 Control Plane (X2-CP) and the S1-AP protocol layer replaces the X2-AP protocol layer in all the protocol stacks (Figure 8).

As this invention is based on 3GPP standardized DeNS and RNs, the signaling procedures related with the Un interface between the CeNB and each CHeNB belonging to the cooperating set, are the ones presented in the standard 3GPP 36.300 for relay nodes:
- RN attachment procedure (3GPP 36.300 Section 4.7.6.1). The procedure is the same as the normal UE attach procedure. It includes: RRC connection setup NAS Attachment, authentication, Security, GTP session creation and S1 context setup.
- RN Bearer activation / modification (3GPP 36.300 Section 4.7.6.2). The procedure is the same as the normal network-initiated bearer activation/modification procedure with the exception that the S-GW/P GW functionality (steps 1 and 6) is performed by the DeNB. This procedure includes: GTP creation, S1-AP bearer setup
- RN startup procedure (3GPP 36.300 Section 4.7.6.3). The procedure consists in two phases.
   ∘ Phase I: Attach for RN preconfiguration. The RN node attaches to the core network (E-UTRAN/EPC) as a UE at power-up and retrieves initial configuration parameters.
   ∘ Phase II: Attach for RN operation. The RN node connects to a DeNB selected from the list acquired during Phase I to start relay operations
- RN detach procedure (3GPP 36.300 Section 4.7.6.3)
- Neighbouring Information Transfer (3GPP 36.300 Section 4.7.6.5)

### X2 extended interface between an eNB and a HeNB:

In this invention the current X2 interface is extended to support an X2 tunnelled.

This tunnelled X2 protocol provides X2 functionality to the link eNB - HeNB and also enable CoMP between the eNB and HeNB.

The proposed new eNB to HeNB X2 interface is tunnelled on a pre-existing X2 interface between a DeNS and a RN. This tunnel make possible to transport X2 information, between an eNB and a HeNB in a transparent mode.

The X2 tunnelled principle is shown in a graphical way in Figure 9. The wireless X2 interface between the CeNB and the CHeNB, using FDD low, will be used to send transparently encapsulated X2 signalling related with the other "normal" radio interface that uses FDD_high. FDD_high supports the UE - eNB/HeNB communications.

The encapsulated X2 signalling messages can transport two types of information:
o Standard X2 messages that enable a wireless X2 interface between an eNB and a HeNB, currently not included in the 3GPP standards. This X2 interface can enable X2 new functionalities between the an eNB and a HeNB as: X2 handover, interference coordination and HeNB cell switching on/off [3GPP 36.300 section 20]
∘ CoMP specific messages between an eNB and a group of HeNBs belonging to a CoMP cooperative set. The proposed solution is flexible offering a transparent container to transport the CoMP user data and signalling, when they were precisely defined. Currently CoMP user and control planes are under discussion in the 3GPP [3].
   To transport X2 data in a pre-existing X2 interface needs to define some new X2 messages, that extend the X2 current interface in the control plane (X2-AP), defined in the standard del 3GPP 36.423 [6]:
o X2 tunnelled transport. This function transport in a transparent mode information between two X2 end points.

Figure 9 presents a possible implementation of the X2 tunnelled transport procedure. The pairs HeNB and eNB exchange standard X2 information through the internal X2 interface, being this information wirelessly transferred between the RN and the DeNS using the X2 tunnelled transport function.

The control message to send tunnelled (Control and/or User Plane) X2 messages, has to be distinguished from normal X2-AP messages unequivocally, in order not to be decoded by the receiver entity, but delivered to the entity connected to the X2-AP bridge. To accomplish this functionality, is necessary to define a new value for the Message Type Information Element (IE) that will be associated to the "X2 tunnelled transport" in the section 9.2.13 of the standard 3GPP 36.423 [6].

The new value of Message Type IEs means an extension of the X2-AP protocol, supported functions and procedures.

The following messages should be added to the Standard X2-AP messages, contained in the standard 3GPP 36.423 [6], without precluding other possible implementations:
∘ X2 TUNNELED TRANSPORT REQUEST
∘ X2 TUNNEL TRANSPORT ACKNOWLEDGE
∘ X2 TUNNEL TRANSPORT FAILURE

Other changes to be introduced include:
- The Information Element "Cause", specified at 36,423, section 9.2.6, should include a new value, although other implementations are possible. The new value of "Cause" is: Cause Group >>Transport Layer Cause> X2 tunnelled transport
- A new Information Element, that will contain the X2 information from the Source e(H)NB to Target e(H)NB. Without precluding other implementations, in this invention this IE is called "Target e(H)NB to Source e(H)NB Transparent Container"

Whereafter it is proposed a possible implementation of the X2 tunnelled transport protocol messages, considering the current IEs and the messages currently defined in the 3GPP 36.423, without precluding other implementations options:
X2 TUNNELED TRANSPORT REQUEST. This message will contain the following Information Elements (lEs): Message Type, Cause, Old eNB X2AP ID, Target Cell ID, UL GTP Tunnel Endpoint Identification, DL GTP Tunnel Endpoint Identification, Target e(H)NB to Source e(H)NB Transparent Container.

The UL and DL GTP Tunnel Endpoint Identification optional element, is used when it is necessary to use X2 User Plane transport between the Target e(H)NB and the Source e(H)NB

X2 TUNNELED TRANSPORT ACKNOWLEDGE. This message will contain the following Information Elements (lEs): Message Type, Cause, E-RABs Admitted List, E-RABs Not Admitted List, Target e(H)NB to Source e(H)NB Transparent Container, Criticality Diagnosis.

X2 TUNNELED TRANSPORT FAILURE. This message will contain the following Information Elements (IEs): Message Type, Old eNB UE X2AP ID, Criticality Diagnosis.

X2 CoMP information to be transported between an eNB and a HeNB:
The detailed X2 protocol and messages to convey CoMP information in a cooperative set, composed by an eNB and a HeNB, has not yet been defined by 3GPP, but the information to be transferred between the nodes had been identified. This information depends on the type of CoMP techniques applied (presented in the section 1.1) and can be classified as:
   1. Explicit channel state (CSI)/statistical feedback information.
   2. Implicit channel state/statistical information feedback, including: Channel Quality Information (CQI), Precoding Matrix Indicator (PMI) and Rank Indicator (RI).
   3. Sounding Reference Signals (SRS) used for Channel State Information (CSI) estimation at eNB exploiting channel reciprocity.

When the X2 extended interface between eNBs and HeNBs will be set up, it could be used for CoMP between an eNB and a cluster of HeNB. CoMP could be inter-site, between independent eNB and intra-site, between cells belonging to the same eNB. The scope of this invention is inter-site

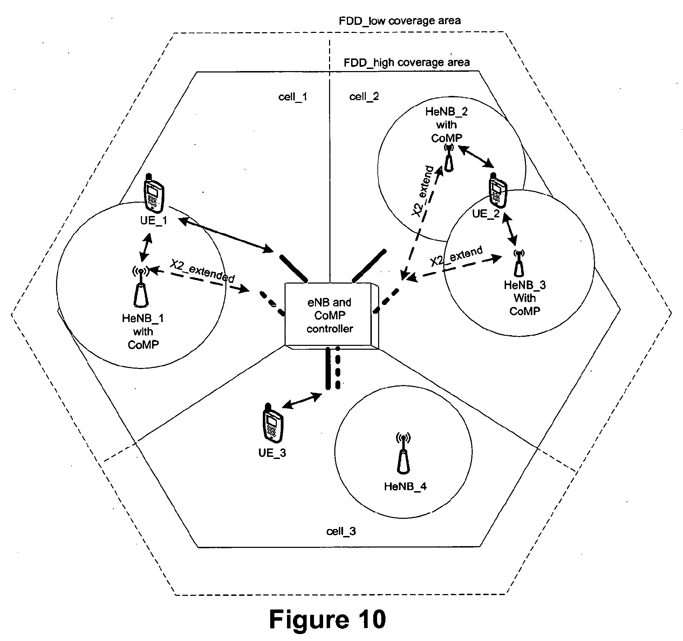

Figure 10 presents an example of CoMP between a central scheduling node, the CoMP controller eNB (to which belongs cell1, cell2 and cell3), and several HeNBs with X2 extended interface and CoMP. In this figure a cooperative set is establish between HeNB_1 and the cell_1 cell to provide service to UE_1. Another cooperative set is established between the cell 2 and HeNB_2 and HeNB_3, to give service to UE_2, in which only HeNB_2 and HeNB_3 are the active transceivers. Finally, UE_3 is only served by cell_3.

In Figure 10 we can observe as FDD_low frequencies have a wider range that the FDD_high frequencies, assuring that CoMP information reach all the points under FDD_high coverage.

### Advantages of the invention:

The principal advantages of this invention are:
1. The principal advantage of invention is to provide a wireless X2 interface between LTE femtocells (HeNB in 3GPP terminology) and LTE base stations (eNB) to provide coordination between these nodes, enabling function as: CoMP, intercell interference coordination (ICIC), X2 handover, energy saving and other future functionalities that will be defined by the 3GPP. Currently there is not an X2 interface between eNBs and HeNBs.
2. The X2 extended wireless interface can offer a low delay because it connects directly two radio nodes. In comparison, the wired X2 counterparts' real implementation can suffer of congestion in the physical (wired) medium, because this interface will be shared between several eNBs using their X2 and S1 interfaces. The proposed X2 wireless interfaces used only for transport X2 signalling can offload the wired X2/S1 interfaces.
3. It is fully compatible with current state of the art of LTE networks, since no essential modifications on the LTE standard are introduced, being necessary to deploy a dual frequency LTE network, in which F_high will be used for normal UE - (H)eNB communication and F_low will be used to establish a X2 wireless interface able to support X2 functionalities and COMP.
4. As the proposed solution is based on standardized LTE architecture logical nodes as eNBs, HeNBs, RNs, DeNBs, it will reuse the protocol layers and functionalities associated to these nodes as: authentication, authorization, security, etc
5. The establishment of the wireless X2 interface between the CeNB and the group of CHeNBs, enable X2 Intercell Interference Coordination (ICIC) between them and also other X2 features as, switching on/off of CHeNB, X2 handover and other present and future functionalities.
6. The proposed solution is flexible enough to accommodate the future X2 CoMP messages (and also other types of X2 messages). The principal change with respect to the LTE standards is a little extension of the X2 functionalities to transmit tunneled X2 messages.
7. It increase the multilayer spectral efficiency and/or cell edge performance by the use of the X2 interface as enabler of radio resource coordination between the macro layer, composed of eNBs, and the femto layer, composed of HeNBs.
8. F_low synchronization can obtained from F-high air interface, reducing equipment cost simplifying its design. The wireless interface that will use F_low usually will have better coverage than the F-high signal, providing extended coverage for the X2 wireless control channel.

### ACRONYMS

- 3GPP: Third Generation Partnership Program
- BS: Base Station
- CeNB: Controller eNB
- CHeNB: Cooperative Home eNB
- CoMP: Coordinated Multipoint
- CQI: Channel Quality Indicator
- CSI: Channel State Indicator
- DL: Downlink
- DeNS: Donor eNB
- DM-RS: Demodulation Reference Signals
- eNB: evolved Node B
- E-UTRAN: Evolved Universal Terrestrial Radio Access Network
- FDD: Frequency Division Duplex
- FDMA: Frequency Division Multiple Access
- GTP: GPRS Tunneling Protocol
- HSPA: High Speed Packet Access
- HeNB: Home eNodeB
- ICIC: Inter Cell Interference Coordination
- IE: Information Element
- IP: Internet Protocol
- LTE: Long Term Evolution
- MAC: Medium Access Control
- MME: Mobility Management Entity
- NB: Node B
- PDU: Protocol Data Unit
- PMI: Precoding Matrix Index
- PRB: Physical Resource Block
- RAN: Radio Access Network
- RAT: Radio Access Technology
- RI: Rank Indicator
- RR: Radio Resource
- RN: Relay Node
- SGW: Serving Gateway
- SRS: Sounding Reference Signals
- TDD: Time Division Duplex
- UE: User Equipment
- UL: Uplink
- X2-AP: X2 Application Protocol
- X2-C: X2 Control Plane
- X2-U: X2 User Plane

### REFERENCES

[1] 3Gpp TS 36.300, "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 10), V10.3.0 (2011-03)", Section 4. Overall architecture
[2] 3Gpp TS 36.819, "3rd Generation Partnership Project; Technical Specification Group Radio Access Network; Coordinated Multi-Point Operation for LTE Physical Layer Aspects (Release 11)"
[3] 3Gpp TS 36.814, "3rd Generation Partnership Project; Technical Specification Group Radio Access Network; Evolved Universal Terrestrial Radio Access (E-UTRA); Further advancements for E-UTRA physical layer aspects (Release 9)"
[4] 3Gpp TS 36.420 " Technical Specification Group Radio Access Network; Evolved Universal Terrestrial Radio Access Network (E-UTRAN); X2 application protocol (X2AP)", V10.1.0 (2011-03)
[5] 3Gpp TS 36.300, "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 10), V10.3.0 (2011-03)", Section 4.7. Support for relaying
[6] 3Gpp TS 36.423 " Technical Specification Group Radio Access Network; Evolved Universal Terrestrial Radio Access Network (E-UTRAN); X2 application protocol (X2AP)", V10.1.0 (2011-03)
[7] "3GPP Mobile Innovation path to 4G; release 9, release 10 and beyond; HSPA+, LTEISAE and LTE Advanced", 3G Americas, February 2010, Section 7.8.4 Coordinated Multipoint Transmission and Reception.
[8] 3Gpp TS 36.424 "Technical Specification Group Radio Access Network; Evolved Universal Terrestrial Radio Access Network (E-UTRAN); X2 data transport", V10.1.0(2011-03)
[9] "Centralized Scheduling for Joint Transmission Coordinated Multi-Point in LTE-Advanced", S.Brueck, L.Zao, J.Giese, M. Awais. International ITEG workshop on smart antennas, 2010,
[10] "Coordinated Multipoint Multiuser-MIMO transmissions over backhaul-constrained mobile access networks", C, Choie,T. Biermann and S. Mizuta, IEEE PIMRC 2011, Toronto
[11] "Backhaul modeling for COMP" Orange, Telefonica, Contribution number R1-111174 to the 3GPP RAN 1 meeting, Taipei, 21-25 February 2011
[12] NEW POSTCOM: "Discussion 01 enhanced mobility solutions between MeNB and HeNB", 3GPP DRAFT; R3-101850 DISCUSSION OF ENHANCED MOBILITY SOLUTIONS BETWEEN MENB ANO HENBJINAL, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE vol, RAN WG3, no. Beijing; 23 June 2010.
[13] CATT: "Discussion on mobility enhancements lor (H)eNBs-to-HeNBs", 3GPP DRAFT; R3-101878, 3RD GENERATION PARTNERSHIP PROJECT (3GPP), MOBILE COMPETENCE CENTRE: 650, ROUTE DES LUCIOLES; F-06921 SOPHIA-ANTIPOLIS CEDEX; FRANCE, vol. RAN WG3, no. Beijing; 23 June 2010.
[14] QUALCOMM INCORPORATED: "Analysis 01 supporting the X2 interlace lor HeNBs", 3GPP DRAFT; R3-101559, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX, FRANCE, vol. RAN WG3, no. Montreal, Canada; 1 May 2010.

## Claims

1. A method for communication in LTE networks, comprising at least one user terminal, UE, communicating through a wireless connection to a macro cellular base station, abbreviated as eNB, and to a at least one femto cellular base station, abbreviated as HeNB, over a cellular system, wherein said method is **characterised in that** it comprises providing a wireless X2 interface between said eNB and HeNB stations in said LTE network to provide communication services to said at least one UE, wherein communication between the eNB and the HeNB via said wireless X2 interface is performed using a frequency band which is different to the frequency band used for communicating the eNB or the HeNB with said at least one user terminal.

2. The method of claim 1, wherein said wireless X2 interface between said eNB and said at least HeNB is provided for establishing coordination between said eNB and HeNB stations.

3. The method of claim 2, comprising establishing said coordination between said eNB and HeNB stations for allowing implementing at least one of the next cooperation mechanisms between said eNB and HeNB stations: a Coordinated Multi-Point transmission/reception, a X2 handover, energy saving, an intercell interference coordination, or a combination thereof.

4. The method of claim 3, comprising implementing said Coordinated Multi-Point, abbreviated as CoMP, transmission/reception mechanism by exchanging CoMP messages through the wireless X2 interface.

5. The method of claim 1, wherein said frequency band used for communicating via the wireless X2 interface comprises working frequencies which are lower and with less radio attenuation than the working frequencies of the frequency band used by the eNB or by the HeNB for communicating with said at least one UE.

6. The method of claim 1, comprising tunnelling said wireless X2 interface between said eNB and said at least HeNB onto a pre-existing X2 interface.

7. The method of claim 6, comprising, in order to build said tunnelling, exchanging control messages through said X2 interface between the eNB and the HeNB, which are distinguishable from non-control X2 messages.

8. The method of claim 7, wherein said control messages are: a X2 tunnel transport request sent by the eNB or HeNB requesting the establishment of the tunnel, and a X2 tunnel transport acknowledge or a X2 tunnel transport failure, sent back by the HeNB or eNB in response to said request.

9. The method of claim 6, comprising:
using for the communication via the wireless X2 interface a lower frequency band than the frequency band used by the eNB or the HeNB with the at least one UE; and
transmitting and receiving encapsulated X2 signalling messages using said lower band of frequency.

10. A system for communication in LTE networks, comprising:
- at least one user terminal to communicate through a wireless connection to a macro cellular base station, eNB, and to a at least one femto cellular base station, HeNB, over a cellular system;
- said at least one macro cellular base station, eNB; and
- said at least one femto cellular base station, HeNB,
**characterised in that** each of said eNB and HeNB comprises wireless X2 communication means configured for establishing a wireless X2 interface to provide communication services to said at least one user terminal,
said system being arranged to deploy a dual band frequency LTE network by working said communication means in a frequency band which is different than the working frequency used by the eNB and the HeNB to communicate with said at least one UE.

11. The system of claim 10, wherein said wireless X2 communication means of said HeNB comprises a relay node and said wireless X2 communication means of said eNB comprises a DeNS supporting relay nodes.

12. The system of claim 11, wherein said wireless X2 communication means comprises, for each of said eNB and HeNB, an extended X2 module and a CoMP module.

13. The system of claim 10, wherein said different frequency band comprises a working frequency which is lower and with less radio attenuation than the working frequency used by the eNB and the HeNB to communicate with said at least one UE.

14. The system of any of previous claims 10 to 13, wherein said macro and femto cellular base stations belong to different cells in a cellular system.

15. The system of any of previous claims 10 to 13, wherein said macro and femto cellular base stations belong to the same cell in a cellular system.

16. The system of claim 10, wherein said system implements the method according to any of the previous claims 1 to 9 by using said wireless X2 communicating means.

## Patentansprüche

1. Verfahren zur Kommunikation in LTE-Netzen, umfassend mindestens ein Nutzerendgerät, UE, das durch eine drahtlose Verbindung mit einer Makrozellen-Basisstation, kurz enB, und mit mindestens einer Femtozellen-Basisstation, kurz HeNB, über ein Zellensystem kommuniziert, wobei das Verfahren **dadurch gekennzeichnet ist, dass** es das Bereitstellen einer drahtlosen X2-Schnittstelle zwischen der eNB- und der HeNB-Station in dem LTE-Netz umfasst, um der mindestens einen UE Kommunikationsdienste zur Verfügung zu stellen, wobei die Kommunikation zwischen der eNB und der HeNB über die drahtlose X2-Schnittstelle unter Verwendung eines Frequenzbands durchgeführt wird, welches sich von dem Frequenzband unterscheidet, das für die Kommunikation der eNB oder der HeNB mit dem mindestens einen Nutzerendgerät verwendet wird.

2. Verfahren nach Anspruch 1, wobei die drahtlose X2-Schnittstelle zwischen der eNB und der mindestens einen HeNB bereitgestellt wird, um eine Koordinierung zwischen der eNB- und der HeNB-Station einzurichten.

3. Verfahren nach Anspruch 2, umfassend das Einrichten der Koordinierung zwischen der eNB- und der HeNB-Station, um die Implementierung mindestens eines der folgenden Kooperationsmechanismen zwischen der eNB- und der HeNB-Station zu ermöglichen: eine koordinierte Mehrpunktübertragung/Empfang, eine X2-Übergabe, ein Energiesparen, eine Interzell-Interferenz-Koordinierung oder eine Kombination davon.

4. Verfahren nach Anspruch 3, umfassend das Implementieren des koordinierten Mehrpunkt(kurz CoMP)-Übertragungs-/empfangsmechanismus durch Austauschen von CoMP-Nachrichten durch die drahtlose X2-Schnittstelle.

5. Verfahren nach Anspruch 1, wobei das Frequenzband, das zur Kommunikation durch die drahtlose X2-Schnittstelle verwendet wird, Arbeitsfrequenzen umfasst, welche niedriger sind und eine geringere Funkdämpfung aufweisen als die Arbeitsfrequenzen des Frequenzbands, das durch die eNB oder die HeNB zur Kommunikation mit dem mindestens einen UE verwendet wird.

6. Verfahren nach Anspruch 1, umfassend das Tunneln der drahtlosen X2-Schnittstelle zwischen der eNB und der mindestens einen HeNB auf eine bereits vorhandene X2-Schnittstelle.

7. Verfahren nach Anspruch 6, umfassend das Austauschen von Steuernachrichten durch die X2-Schnittstelle zwischen der eNB und der HeNB, welche von Nicht-Steuer-X2-Nachrichten unterschieden werden können, um das Tunneln aufzubauen.

8. Verfahren nach Anspruch 7, wobei die Steuernachrichten Folgendes sind: eine X2-Tunneltransport-Anfrage, die durch die eNB oder HeNB gesendet wird, welche den Aufbau des Tunnels anfordert, und eine X2-Tunneltransport-Bestätigung oder ein X2-Tunneltransport-Fehler, die von der HeNB oder der eNB als Antwort auf die Anfrage zurückgesendet werden.

9. Verfahren nach Anspruch 6, umfassend:
Verwenden eines niedrigeren Frequenzbands als das Frequenzband, das von der eNB oder der HeNB mit dem mindestens einen UE verwendet wird, zur Kommunikation über die drahtlose X2-Schnittstelle; und
Übertragen und Empfangen von eingekapselten X2-Signalisierungsnachrichten unter Verwendung des niedrigeren Frequenzbands.

10. System zur Kommunikation in LTE-Netzen, umfassend:
- mindestens ein Nutzerendgerät zur Kommunikation durch eine drahtlose Verbindung mit einer Makrozellen-Basisstation, eNB, und mit mindestens einer Femtozellen-Basisstation, HeNB, über ein Zellensystem;
- die mindestens eine Makrozellen-Basisstation, eNB; und
- die mindestens eine Femtozellen-Basisstation, HeNB,
**dadurch gekennzeichnet, dass** jede der eNB und HeNB drahtlose X2-Kommunikationsmittel umfasst, die ausgebildet sind, um eine drahtlose X2-Schnittstelle aufzubauen, um dem mindestens einen Nutzerendgerät Kommunikationsdienste zur Verfügung zu stellen,
wobei das System eingerichtet ist, um ein Dualband-Frequenz-LTE-Netz einzusetzen, indem die Kommunikationsmittel in einem Frequenzband arbeiten, das sich von der Arbeitsfrequenz unterscheidet, die von der eNB und der HeNB verwendet wird, um mit dem mindestens einen UE zu kommunizieren.

11. System nach Anspruch 10, wobei die drahtlosen X2-Kommunikationsmittel der HeNB einen Relaisknoten umfassen und die drahtlosen X2-Kommunikationsmittel der eNB eine Relaisknoten unterstützende DeNB umfassen.

12. System nach Anspruch 11, wobei die drahtlosen X2-Kommunikationsmittel für jede der eNB und HeNB ein erweitertes X2-Modul und ein CoMP-Modul umfassen.

13. System nach Anspruch 10, wobei das unterschiedliche Frequenzband eine Arbeitsfrequenz umfasst, welche niedriger ist und eine geringere Funkdämpfung aufweist als die Arbeitsfrequenz, die von der eNB und der HeNB verwendet wird, um mit dem mindestens einen UE zu kommunizieren.

14. System nach einem der vorherigen Ansprüche 10 bis 13, wobei die Makro- und Femtozellen-Basisstationen zu verschiedenen Zellen in einem Zellensystem gehören.

15. System nach einem der vorherigen Ansprüche 10 bis 13, wobei die Makro- und Femtozellen-Basisstationen zu derselben Zelle in einem Zellensystem gehören.

16. System nach Anspruch 10, wobei das System das Verfahren nach einem der vorherigen Ansprüche 1 bis 9 unter Verwendung der drahtlosen X2-Kommunikationsmittel implementiert.

## Revendications

1. Procédé pour la communication dans les réseaux LTE, comprenant au moins un terminal d'utilisateur, UE, communiquant à travers une connexion sans fil à une station de base macrocellulaire, abrégée en eNB, et à au moins une station de base femtocellulaire, abrégée en HeNB, sur un système cellulaire, dans lequel ledit procédé est **caractérisé en ce qu'**il comprend la fourniture d'une interface sans fil X2 entre lesdites stations eNB et HeNB dans ledit réseau LTE pour fournir des services de communication audit au moins un UE, dans lequel une communication entre la eNB et la HeNB via ladite interface sans fil X2 est effectuée en utilisant une bande de fréquence qui est différente de la bande de fréquence utilisée pour communiquer la eNB ou la HeNB avec ledit au moins un terminal d'utilisateur.

2. Procédé selon la revendication 1, dans lequel ladite interface sans fil X2 entre ladite eNB et ladite au moins HeNB est fournie pour établir une coordination entre lesdites stations eNB et HeNB.

3. Procédé selon la revendication 2, comprenant l'établissement de ladite coordination entre lesdites stations eNB et HeNB pour permettre de mettre en oeuvre au moins l'un des mécanismes de coopération suivants entre lesdites stations eNB et HeNB: une transmission/réception de points multiples coordonnés, un transfert X2, une économie d'énergie, une coordination d'interférence intercellulaire, ou une combinaison de ceux-ci.

4. Procédé selon la revendication 3, comprenant la mise en oeuvre desdits points multiples coordonnés, abrégés en CoMP, un mécanisme de transmission/réception en échangeant des messages CoMP à travers l'interface sans fil X2.

5. Procédé selon la revendication 1, dans lequel ladite bande de fréquence utilisée pour communiquer via l'interface sans fil X2 comprend des fréquences d'opération qui sont inférieures et avec moins d'affaiblissement radio que les fréquences d'opération de la bande de fréquence utilisée par la eNB ou par la HeNB pour communiquer avec ledit au moins un UE.

6. Procédé selon la revendication 1, comprenant la tunnelisation de ladite interface sans fil X2 entre ladite eNB et ladite au moins HeNB sur une interface préexistante X2.

7. Procédé selon la revendication 6, comprenant, afin de construire ladite tunnelisation, l'échange de messages de contrôle à travers ladite interface X2 entre l'eNB et la HeNB, qui peuvent être distingués des messages de non-contrôle X2.

8. Procédé selon la revendication 7, dans lequel lesdits messages de contrôle sont : une requête de transport de tunnel X2 envoyée par la eNB ou la HeNB demandant l'établissement du tunnel, et une reconnaissance de transport de tunnel X2 ou un échec de transport de tunnel X2, renvoyé par la HeNB ou la eNB en réponse à ladite requête.

9. Procédé selon la revendication 6 comprenant:
l'utilisation pour la communication via l'interface sans fil X2 d'une bande de fréquence inférieure à la bande de fréquence utilisée par la eNB ou la HeNB avec le au moins un UE; et
la transmission et la réception de messages de signalement encapsulés X2 utilisant ladite bande de fréquence inférieure.

10. Système pour la communication dans les réseaux LTE, comprenant :
- au moins un terminal d'utilisateur pour communiquer à travers une connexion sans fil à une station de base macrocellulaire; eNB, et à au moins une station de base femtocellulaire, HeNB, sur un système cellulaire;
- ladite au moins une station de base macrocellulaire, eNB ; et
- ladite au moins une station de base femtocellulaire, HeNB;
**caractérisé en ce que** chacune desdites eNB et HeNB comprend des moyens de communication sans fil X2 configurés pour établir une interface sans fil X2 pour fournir des services de communication audit au moins un terminal d'utilisateur,
ledit système étant disposé pour déployer un réseau LTE à bande de fréquence double en opérant lesdits moyens de communication dans une bande de fréquence qui est différente de la fréquence d'opération utilisée par la eNB et la HeNB pour communiquer avec ledit au moins un UE.

11. Système selon la revendication 10, dans lequel lesdits moyens de communication sans fil X2 de ladite HeNB comprennent un noeud relais et lesdits moyens de communication sans fil X2 de ladite eNB comprennent un DeNB supportant les noeuds relais.

12. Système selon la revendication 11, dans lequel lesdits moyens de communication sans fil X2 comprennent, pour chacune desdites eNB et HeNB, un module étendu X2 et un module CoMP.

13. Système selon la revendication 10, dans lequel ladite bande de fréquence différente comprend une fréquence d'opération qui est inférieure et avec moins d'affaiblissement radio que la fréquence d'opération utilisée par la eNB et la HeNB pour communiquer avec ledit au moins un UE.

14. Système selon l'une quelconque des revendications précédentes 10 à 13, dans lequel lesdites stations de base macrocellulaires et femtocellulaires appartiennent à des cellules différentes dans un système cellulaire.

15. Système selon l'une quelconque des revendications précédentes 10 à 13, dans lequel lesdites stations de base macrocellulaires et femtocellulaires appartiennent à la même cellule dans un système cellulaire.

16. Système selon la revendication 10, dans lequel ledit système met en oeuvre le procédé selon l'une quelconque des revendications précédentes 1 à 9 en utilisant lesdits moyens de communication sans fil X2.
